# EUROPEAN PATENT APPLICATION

(11) **EP 0 730 057 A1**
(43) Date of publication of application: **04.09.1996**
(21) Application number: 94905881.2
(22) Date of filing: 03.11.1993
(51) Int. Cl.: D06C 29/00

(54) **MACHINE FOR PROCESSING TEXTILE SHEETS WITH A LOW-TEMPERATURE PLASMA**

(71) Applicant: Aktsionernoe Obschestvo "Tsvet", Kostroma, 156603 (RU)
(72) Inventor: ZELDIN, July Rafailovich, Ivanovo, 153012 (RU)
(74) Representative: W.P. Thompson & Co.
(86) International application number: RU9300256
(87) International publication number: WO9512703

(57) **Abstract**

The invention relates to the textile industry. The machine comprises a sealed housing (1) which houses a sheet transport system (13) in the form of power-driven rotating drums (10, 11) and guide rollers (14) for the loop transport of the sheet (13) from drum )10= to drum (11). Electrodes are provided in the housing (1) in the loop transport zone;they are connected to the power source (15) needed for the plasma treatment of the sheet (13). A vacuum pupm is connected to the housing. According to the invention, the drum (10, 11) are arranged to one side of the guide rollers (14), one above the other, un such a way that the upper drum (11) is displaced horizontally towards the rollers (14) in relation to the lower drum (10). The housing (11) has the shape of a surface of revolution.

## Description

### Technical Field

The present invention relates in general to the textile industry and more specifically it concerns machines for treating textile webs with low-temperature plasma.

### Background Art

Treating textile products with low-temperature plasma is resorted to with a view to imparting a number of properties thereto (e.g., high hygroscopicity, lower web shrinkage, and higher adhesion to latexes), as well as preparing the web for subsequent chemical treatment.

One state-of-the-art machine for treating textile webs with low-temperature plasma (US, A, 4,437,324) is known to comprise an air-tight housing accommodating a textile web plasma-treating device which comprises electrodes connected to a source of electric current. The housing is connected to an evacuation system aimed at creating and maintaining a negative pressure therein, necessary for plasma burning. The air-tight machine housing has openings for web guiging, cleaning and repairing machine mechanisms.

The abovediscussed machine is intended for continuously treating textile web, for which reason provision is made for continuous web feed in and feed out through hermetically sealed gates. The take-in-take-out arrangement consists of drums located outside the air-tight housing, guide rollers located in the air-tight housing for guiding the web from one drum to another, and rotation drives for said drums.

However, the presence of hermetically sealed gates for the treated web feed in and out sophisticates the Construction of said machine. In addition, said gates fail to ensure reliable machine operation in case of a prolonged operation, while the necessity of using the openings for, e.g., web guiding hampers attending the machine.

Moreover, such a machine occupies large production areas.

One more prior-art machine for treating textile webs with low-temperature plasma (SU, A, 1,536,883) is known to comprise an air-tight housing with a stationary base and vacuum caps.

The drums of the take-in-take-out arrangement are accommodated in the housing which is composed of three intercommunicating sections whose bases communicate with one another through slit-shaped passages for web feeding, while the vacuum caps are made from complicate configuration spherical elements. The first section of the housing accommodates a drum from which the web is wound off.The second section as along the run of the web houses guide rollers for loop (zigzag) web guiding. The same section accommodates the electrodes of a web plasma-treating device, which are connected to an electric generator. The electrodes are placed inside each of the web loop. The third section of the housing accommodates the web take-up drum.

Such a consecutive layout of the elements of the machine for treating textile web with low-temperature plasma does not reduce the production area occupied by the machine, and evacuation of a large volume of the air-tight housing takes much time to carry out. Moreover, the intricately shaped vacuum caps amd flat walls of the stationary base that experience much load during evacuation, require consumption of large amounts of metal for their manufacture.

When attending the machine (i.e., web taking in and out, and repairs) the vacuum caps are raised vertically. Rolls of web are replaced by their transporting by special trolleys which also requires additional production areas.

The fact that the electrodes are located inside each web loop compels one to treat with plasma both web sides even when it is not required technologically.

### Disclosure of the Invention

The present invention has for its primary object to provide a machine for treating textile webs with low-temperature plasma having such a construction of its elements and such a mutual arrangement thereof that ensure a minimized size of the machine and a minimized specific metal content, as well as render its attendance convenient.

The foregoing objects is accomplished due to the fact that in a machine for treating textile webs with low-temperature plasma, comprising an air-tight housing provided with a removable cap and a stationary base mounting a web transporting system which incorporates a web take-in-take-out arrangement appearing as rotary drums for winding web rolls, guide rollers for loop web guiding from one drum to the other, and a drive for rotating the drums, a web plasma-treating device, comprising electrodes located in the area of the web loop guiding and connected to a source of electric power, as well as an evacuating system of the housing, according to the invention, the drums of the web take-in-take-out arrangement are located on the same side of the guide rollers for web loop guiding one above the other in such a manner that the axis of the top drum is offset horizontally with respect to the axis of the bottom drum towards the guide rollers which are arranged in two rows one above the other, and the removable cap and the stationary base are shaped as a surface of revolution.

For convenience in machine attendance the removable cap is expedient to have a lifting-and-swivelling device.

Whenever it is necessary to utilize to a maximum extent the cap interior, the axes of the guide rollers of the top and bottom rows are expedient to be arranged along the line which is equidistant from the line that defines the surface of revolution of the removable cap.

When it is necessary to treat a textile web with plasma on one side only, it is reasonable that one additional lower-diameter guide roller is provided beneath each guide roller in the top row and above each guide roller in the bottom row so that the axes of each pair of the opposite rollers lie in parallel planes.

In the machine for treating textile webs with low-temperature plasma, according to the invention, a considerable reduction of the volume of the air-tight housing interior and of a required thickness of the walls thereof is attained due to the fact that the drums of the web take-in-take-out arrangement are arranged one above the other with respect to the area of the web loop guiding, with the result that a general specific metal content of the machine is substantially reduced. In addition, provision of the lifting-and-swivelling device in the removable vacuum cap enables complete opening of the machine for web roll replacing, thus rendering its attendance and repairs more convenient.

A possibility of arranging the guide rollers acording to the "loop-in-loop" pattern enables the electrodes to be positioned on the one web side, thus reducing the space of the treatment zone. In addition, specific power consumption is half as much in cases where the web face or back alone is to be plasma-treated.

The shape of the housing as a surface of revolution and swivelling the vacuum cap when lifting it do not virtually increase the production area occupied by the machine, since the evacuation system and the electric generator are situated in the zone above which the vacuum cap is located when in the topmost position.

### Brief Description of the Drawings

In what follows the invention will be better understood by reference to the following examples, which are provided for purposes of illustration only and are not to be considered limiting of the invention, and to the accompanying drawings, wherein:
FIG.1 is a general diagrammatic view of a machine for treating textile webs with low-temperature plasma, according to the invention;
FIG.2 is a plan view of the machine, according to the invention;
FIG.3 is a view of the machine, according to the invention, facing arrow A in FIG.1, with the cap raised;
FIG.4 is an alternative embodiment of arrangement of guide rollers and electrodes in the machine, according to the invention, showing the axes of the guide rollers arranged along the line equidistant to the line defining the surfaces of revolution of the removable cap; and
FIG.5 is one more embodiment of arrangement of guide rollers and electrodes in the machine for treating textile webs with low-temperature plasma, according to the invention, wherein two rows of additional rollers are provided.

### Best Methods of Carrying Out the Invention

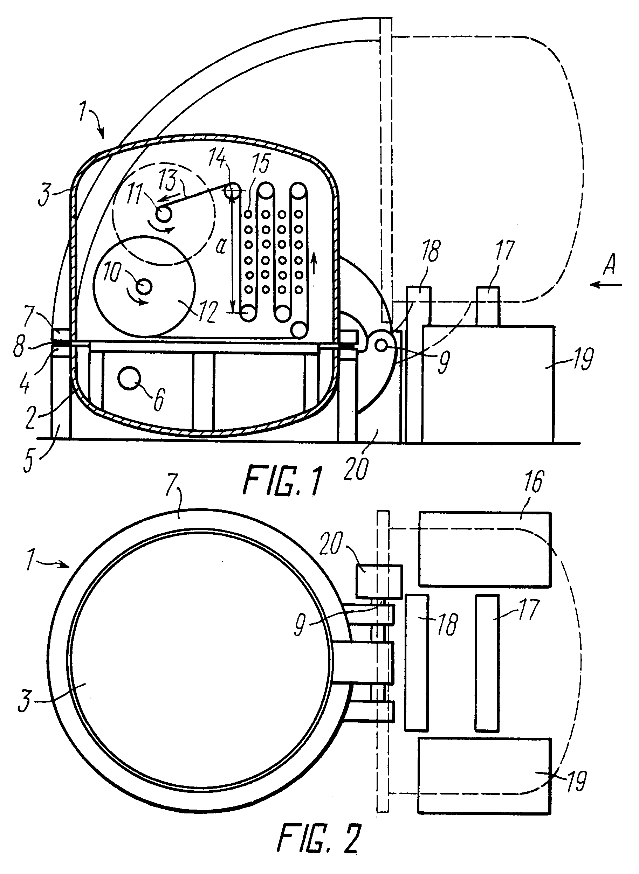

The machine for treating textile webs with low-temperature plasma as shown in FIGS.1, 2, and 3, comprises an axisymmetric air-tight housing 1 composed of a stationary base 2 and a removable vacuum cap 3.

The cap 3 has the shape of a surface of revolution, i.e., a torospherical shape in the given particular case. The stationary base 2 is provided with a flange 4, stands 5 with which the base 2 is held to the foundation, and a port 6 for connecting air conduits of the evacuation system (purposely omitted in the drawing) to the housing 1. The base 2 is a surface of revolution, i.e., a torospherical surface in the given particular case. The flange 4 of the base 2 contacts a flange 7 of the removable vacuum cap 3 through a sealing gasket 8. The cap 3 is linked to the base 2 through a hinge joint having a pivot 9. A web transporting system is mounted on the stationary base 2 in the housing 1. said system comprising a take-in-take-out arrangement which has rotary drums 10, 11 placed one above the other, namely, the drum 10 is located beneath the drum 11. Each of the drums 10, 11 is connected to the drive (not shown) for its rotation. A roll 12 of textile product (hereinafter a web 13) is wound off from one of the drums 10, 11 (from the drum 10 in this particular case) and is wound onto the other drum 11. Two rows of guide rollers 14 are spaced a definite distance apart from each other in the machine housing 1 on the same side of the plane passing through the axes of the drums 10, 11, said rollers being intended for loop guiding the web 13 between the deums 10 and 11.

The guide rollers 14 of the top and bottom rows are vertically set apart from each other a distance "a" and form loops each having a length equal to the distance "a".

The axes of the top row of the guide rollers 14 do not extend, in the given particular embodiment of the machine, beyond the upper edge (indicated with a dotted line) of the roll of the web 13 wound onto the drum 11, and the axes of the bottom row of the guide rollers 14 do not extend beyond the lower edge of the roll 12. This makes it possible to utilize nearly completely the volume of the interior space of the housing 1 for accommodating the mechanisms and devices of the machine.

Electrodes 15 electrically connected to the power source, e.g., a generator 16, are located in the zone of loop guiding of the web 13, namely, in the space confined within the loops of said web. The electrodes are so arranged that their axes are parallel to the axes of the rollers 14.

The axis of the top drum 11 is offset relative to the axis of the bottom drum 10 in a horizontal plane towards the guide rollers 14.

Indicated with a dotted line in FIG.1 is the removable vacuum cap in its uppermost (raised) position, while resting upon supports 17 and 18. Located under the cap 3 in the uppermost position are also vacuum pumps 19 and the electric generator 16.

The vacuum pump 3 is swivelled by means of an actuator 20, e.g., a hydraulic cylinder.

In a given embodiment of the machine the stationary base 2 has a torospherical shape; however, the base 2 may have the shape of any other surface of revolution (e.g., conical or spherical).

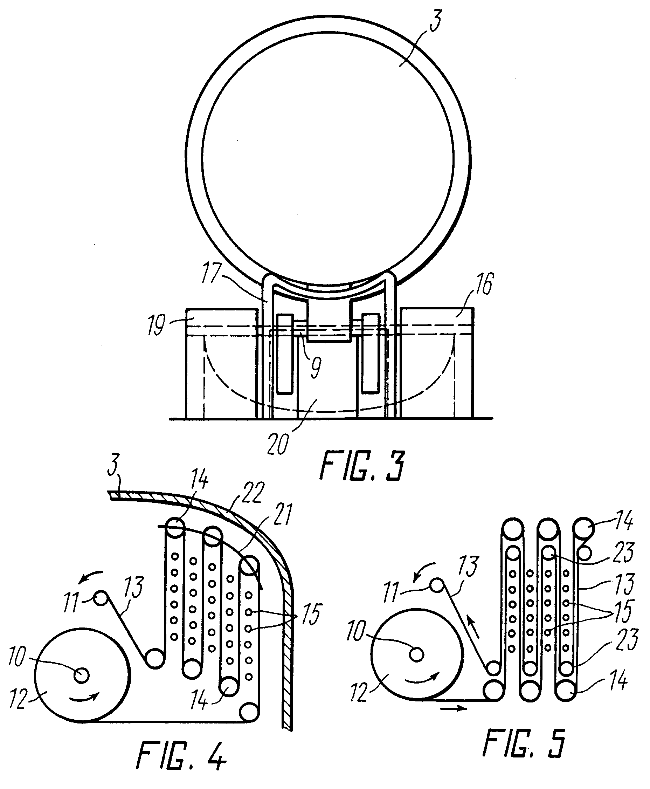

FIG.4 presents an embodiment of arrangement of the guide rollers 14, according to which the axes of the top row of the guide rollers 14 are oriented along a line 21 which is equidistant from a line 22 that defines the surface of revolution of the removable cap 3. The line 22 is arc-shaped of a variable radius, and the axes of the top and bottom rows of the rollers 14 are oriented lengthwise the similar arc 21. Such an arrangement of the guide rollers 14 in conjunction with the shape of the cap 3 makes it possible to a maximum extent utilize the interior space of the housing 1, which adds to the capacity of the machine and saves production areas.

FIG.5 demonstrates an embodiment of the system of transporting the web 13 adapted for unilateral treatment of the web 13 with low-temperature plasma.

An additional smaller-diameter guide roller 23 is provided beneath each guide roller 14 of the top row and above each guide roller 14 of the bottom row so that the axes of each pair of the opposite rollers 14, 23 lie in the parallel vertical planes.

The axes of the electrodes 15 lie likewise in the vertical planes passing through the rollers 14 and 23.

The machine of FIGS.1,2,3, and 4 operates as follows.

The lifting-and-swivelling device 20 is turned on to swivel the cap 3 to the uppermost position. Then the roll 12 of the web 13 is put on the drum 10. The running end of the web 13 is passed first through the bottom roller 14, then through the top roller 14, and is then held to the drum 11. Such a guiding of the web 13 forms loops within which the electrodes 15 are located. Next the vacuum cap 3 is returned to the working position, and the vacuum pumps 19 are put in operation. The gasket 8 provides the required sealing of a gap between the flange 7 of the vacuum cap 3 and the flange 4 of the stationary base 2 mounted on the stands 5.

The vacuum pumps 19 evacuate air from the housing 1 through the port 6 to establish rarefaction in the interior of the housing 1, required for the plasma to burn. The electric generator 16 supplies voltage to the electrodes 15 which plasma formation in the zone of treatment of the web 13. Thereupon the rotation drive of the machine drums 10, 11 is turned on to wind the drum 13 from the drum 10 onto the drum 11, whereby the web 13 is exposed to plasma treatment while passing through the zone of the electrodes 15.

The electrodes 15 located in the space confined within one loop treat one side of the web 13, while the electrodes 15 situated in the space confined within a next loop as along the run of the web 13 treat the other side thereof.

Thus, while passing through the treatment zone the web 13 is treated with low-temperature plasma on both sides thereof.

Once the entire web 13 has been rewound onto the drum 11 and only the running web end has remained on the drum 10, the rotation drive of the drums 10, 11 is reversed when a multipass treatment of the web 13 is required, or is turned off when a single-pass treatment is sufficient.

Once the drive has been turned off, the vacuum pumps 19 are turned off, too, air is admitted to pass into the interior of the housing 1, and the vacuum cap 3 is brought to the uppermost position again; while so doing, the vacuum cap 3 rests upon the supports 17, 18 which simplifies extremely its mounting and dismanlting, and the zone of location of the take-in-take-out arrangement and the electrodes 15 are exposed completely for maintenance operations.

Finally, the treated roll 12 is discharged, a fresh roll is loaded, and the entire cycle is repeated.

When the guide rollers 14 and the electrodes 15 are so arranged as illustrated in a FIG.4, the operation of the machine differ in nothing from that described with reference to the previous embodiment.

Operation of the machine having the web transporting system demonstrated in FIG.5, differs from that described above in that the web 13 is guided in another way.

The running end of the web 13 is passed through the rollers 14 and 23 alternately.

First the web 13 of the roll 12 is passed through the first from left bottom roller 14. Then the web 13 of the roll 12 is fed to the first from left top roller 23 of a smaller diameter, and further on to the second bottom roller 14. Thus, a first loop is established within which the electrodes 15 are located. Next the web 13 is further passed from the top rollers 23 to the bottom rollers 14, whereupon the web 13 is fed to the rightmost top roller 14, the rightmost bottom roller 23, and again through the second from right top roller 14. Thus, a first double loop (or the "loop-in-loop" pattern) is established. Having passed the web through all the rollers 14 and 23 in a way similar to that described before, a plurality of double loops are provided, the electrodes 15 being located in the space confined within said double loops. Such a guiding of the web 13 allows of treating only one side thereof with a very space-saving arrangement of the web 13, which reduces much the size of the plasma-treatment zone.

### Industrial Applicability

The invention can find application in the textile industry where textile products need treatment with low-temperature plasma.

Furthermore, the invention is applicable in some other industries where sheet materials are to be vacuum-treated.

## Claims

1. A machine for treating textile webs (13) with low-temperature plasma, comprising an air-tight housing (1), comprising a removable cap (3) and a stationary base (2) mounting a web transporting system (13) which incorporates a web take-in-take-out arrangement appearing as rotary drums (10, 11) for winding rolls (12) of the web (13), guide rollers (14) for the loop guiding of the web (13) from the drum (10) to the drum (11), a drive for rotating the drums (10, 11), a device for plasma-treating the web (13), comprising electrodes (15) located in the zone of the loop guiding of the web (13) and connected to a source (16) of electric power, as well as an evacuating system of the housing (1), CHARACTERIZED in that the drums (10, 11) of the take-in-take-out arrangement are located on the same side of the guide rollers (14) for the loop guiding of the web (13) one above the other in such a manner that the axis of the top drum (11) is offset horizontally with respect to the axis of the bottom drum (10) towards the guide rollers (14) which are arranged in two rows one above the other, and the removable cap (3) and the stationary base (2) are shaped as a surface of revolution.

2. A machine for treating textile webs with low-temperature plasma as set forth in claim 1, CHARACTERIZED in that the removable cap (3) is provided with a lifting-and-swivelling device (20).

3. A machine for treating textile webs with low-temperature plasma as set forth in claims 1 and 2, CHARACTERIZED in that the axes of the guide rollers (14) of the top and bottom rows are arranged in each row along a line (21) which is equidistant from a line (22) that defines the surface of revolution of the removable cap (3).

4. A machine for treating textile webs with low-temperature plasma as set forth in claims 1, 2, and 3, CHARACTERIZED in that one additional smaller-diameter guide roller (23) is provided beneath each guide roller (14) in the top row and above each guide roller (14) in the bottom row so that the axes of each pair of the opposite rollers (14, 23) lie in parallel planes.
